Europäisches Patentamt

European Patent Office

Office européen des brevets

(11) Publication number: **0 406 177 A1**

# EUROPEAN PATENT APPLICATION

(21) Application number: 90830258.1

(51) Int. Cl.⁵: **B23Q 7/03**, B65G 47/28

(22) Date of filing: 08.06.90

(30) Priority: 30.06.89 IT 353389

(43) Date of publication of application:
02.01.91 Bulletin 91/01

(84) Designated Contracting States:
AT BE DE ES FR GB NL

(71) Applicant: SCM GROUP S.p.A.
Via Emilia 77
I-47037 Rimini (Forli)(IT)

(72) Inventor: Gemmani, Giuseppe
Via Marecchiese 20
I-47037 Rimini (Forli)(IT)

(74) Representative: Lanzoni, Luciano
c/o BUGNION S.p.A. Via dei Mille, 19
I-40121 Bologna(IT)

(54) An accelerator device for machines operating in continuous cycle, in particular woodworking machines.

(57) The device comprises an intercepting element (6) anchored to the fixed bed (1a) of a machine (1) in such a way as to ensure a substantially straight trajectory when engaging the workpiece (2), and located preceding the vertical stop (5) of a tool carriage (3) along the path followed by the work; also, a transmission element (7) interposed between the intercepting element (6) and the carriage (3) and in contact with or coupled to the carriage, which is pivoted to the fixed bed (1a) to enable its rotation through a given angle (α) in relation to the intercepting element. On engagement of the intercepting element by the advancing workpiece, a cam profile (8) interacts with the transmission element (7) to invest the carriage (3) with a steadily accelerating rectilinear movement of duration calculated to ensure that the velocity of the carriage is matched to that of the workpiece when the two ultimately latch together.

FIG 2

# AN ACCELERATOR DEVICE FOR MACHINES OPERATING IN CONTINUOUS CYCLE, IN PARTICULAR WOODWORKING MACHINES

The present invention relates to an accelerator device designed for integration into machines in which operation is continuous, and in particular woodworking machinery.

Conventionally, in woodworking machines designed to operate a continuous cycle, and in particular those which machine the edges of the work, use is made generally of a pair of chains, or a combination of chains and belts, by which the workpiece is gripped from above and below and conveyed horizontally, even for considerable distances.

The chains or belts are flanked on either side by tools which machine the work as it passes through. Work conveyed in this manner can be subjected to two types of machining, of which one is continuous, as in the case of planing the edges, for example, where the planing tools may be rotary or fixed, but will in any event be rigidly associated with the bed of the machine and thus stationary in relation to the passage of the work.

The second type of machining is intermittent, for example as when sinking holes, squaring end grains or rounding off corners; in this instance, the relative tool traverses horizontally, together with and at a rate of longitudinal feed matched to that of the work. Accordingly, the tools utilized for intermittent machining are mounted to a carriage capable of movement in relation to the fixed bed of the machine, which latches onto the approaching workpiece by means of a stop rigidly associated with the carriage itself, remaining in contact for as long as is necessary to effect the operation, and is then released by a spring or a pneumatic cylinder and returned to its initial position.

The device thus outlined is lacking in practical advantage however, as increased linear velocity of the work is accompanied by the problem of impact, that is, of the work striking against the carriage stop. Such impact can occasion not inconsiderable damage to the wood, when occurring at high speed, and is attenuated in current machines by setting the carriage in motion early, directing air into the second chamber of the return cylinder so as to accelerate the tool unit prior to engagement; the operation is difficult to control however, and can give rise to retarded machining, especially where different operating speeds may be in use and the amount of air requires continually adjusting.

Accordingly, the object of the invention is one of overcoming the drawback described above, through the adoption of an exclusively mechanical device rigidly associated in part with the bed of the machine, which is capable of absorbing the thrust received at constant velocity from the work and transferring it as a uniformly accelerating thrust to the moving carriage, thereby enabling a gentle engagement between work and carriage by virtue of the almost negligible relative velocity achieved.

The stated object is realized with an accelerator device as characterized in the appended claims; such a device consists essentially in an element designed to intercept each workpiece, anchored to a fixed part of the continuous cycle machine in such a way as to establish a substantially straight trajectory following interception, and occupying a position which precedes that of a vertical stop, in relation to the feed direction of the workpiece. The device further comprises a transmission element located between the intercepting element and a moving tool carriage, which is engaged at least in contact with the tool carriage and pivoted to the fixed structure of the machine in such a way as to establish a given angle of rotation in relation to the intercepting element, and acceleration means, by which the transmission element is engaged and rendered able to transfer a uniformly accelerated rectilinear motion to the moving carriage once the intercepting element is engaged by the horizontally advancing work, for a duration such as permits of matching the velocity of the carriage substantially to that of the work.

One of the advantages obtainable according to the present invention is that by adopting a device structured in this manner, it becomes possible to eliminate any likelihood of impact attributable to differences in velocity between the work and the vertical stop of the tool carriage; what is more, in adopting a purely mechanical and geometrical design, there is no adjustment required whatever during operation of the device in the machine, even with work supplied at different feed velocities.

In short, the device disclosed may be considered as being self-adapting and self-adjusting to whatever feeds and speeds are operated by the machine into which it is integrated.

The invention will now be described in detail, by way of example, with the aid of the accompanying drawings, in which:

-fig 1 is a schematic frontal elevation showing part of a continuous cycle woodworking machine equipped with the device according to the present invention;

-figs 2 and 2a are schematic frontal elevations showing the device according to the invention in two different operating positions;

-figs 3 and 3a are schematic frontal elevations showing an alternative embodiment of the device according to the invention in two different operating positions;

-figs 4 and 4a are schematic frontal elevations showing a further alternative embodiment of the device according to the invention in two different operating positions.

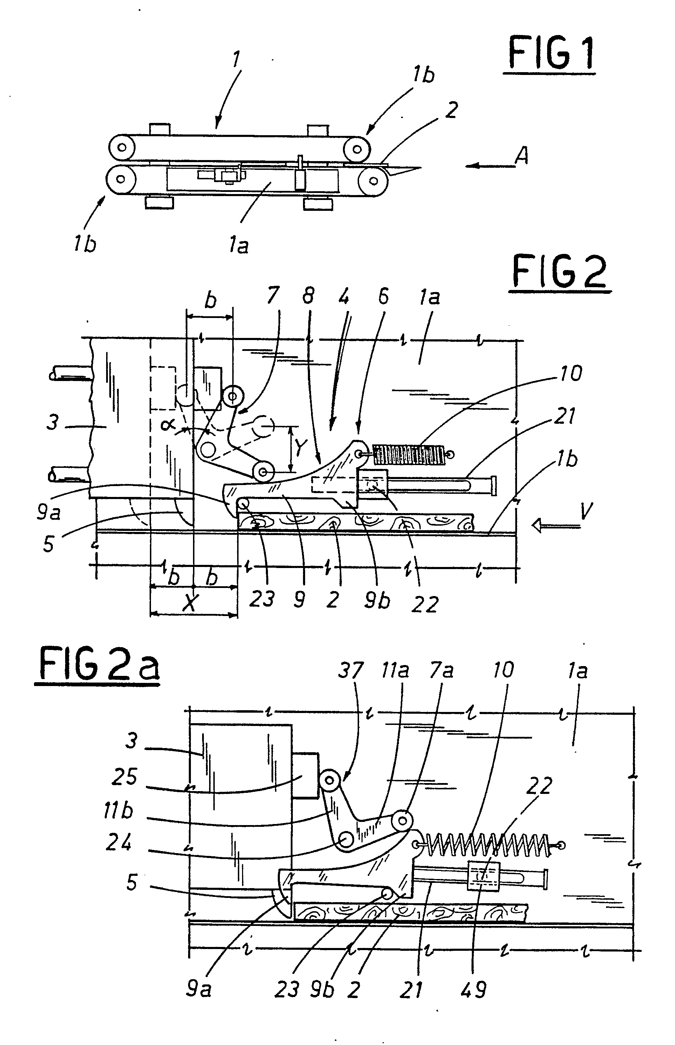

As illustrated in the drawings, an accelerator device according to the invention is designed for integration into machines operating a continuous production cycle, and in particular, woodworking machines. Such a machine, denoted 1 in its entirety in fig 1, is equipped with a pair of chain or belt loops 1b disposed one above the other and occupying a vertical plane; the purpose of the chain or belt loops 1b is to take up workpieces 2, effectively clamping the wood from above and below, and convey them through a horizontal path. For woodworking purposes, the machine 1 is equipped with a set of stationary tools mounted to a fixed part or support structure 1a and flanking the workpiece 2 on either side, and a plurality of moving tools occupying permanent positions on a carriage 3 that is capable of movement in relation to the fixed structure 1a.

The tool carriage 3 is provided with activating means that enable it to latch onto the workpiece 2 advancing horizontally in the direction denoted A, by way of a vertical stop 5 projecting downwards from the carriage itself, and to reduce the margin of relative velocity thereafter to zero.

More exactly, the activating means in question are denoted 4 in their entirety, and comprise three main elements (see figs 2, 3 and 4): the first, an element 6 by which the workpiece 2 is intercepted, anchored indirectly to the fixed structure 1a in such a way as to ensure a substantially straight trajectory following interception, and occupying a position preceding that of the vertical stop 5 in relation to the feed direction A; the second, a transmission element 7, interposed between the intercepting element 6 and the tool carriage 3 and engaging at least in contact with the carriage by way of an active member 37, which is pivotably mounted to the fixed structure 1a in such a way as to enable a given angle of rotation $\alpha$ in relation to the intercepting element 6; and third, means of acceleration denoted 8, by which the transmission element 7 is engaged and rendered able to transfer a uniformly accelerated rectilinear motion to the carriage 3 following engagement of the intercepting element 6 by the horizontally advancing workpiece 2 for a duration such as enables the tool carriage 3 to gain substantially the feed velocity V of the workpiece 2.

Fig 2 illustrates the elements in a first possible embodiment. In this instance, acceleration means 8 consist in a cam of parabolic profile incorporated into the top of the intercepting element 6, which in turn consists in a plate 9 provided at the end nearest the carriage 3 with a downwardly directed hook 9a positioned to engage the leading edge of the horizontally advancing workpiece 2.

The plate 9 is disposed parallel to the direction followed by the workpiece and capable of travelling a given previously selected distance x, carried by a horizontal rod 21 which is integral with the plate 9 and slidably accommodated by a bushing 49 mounted to the fixed structure 1a in a stationary position by way of a pivot 22; the bushing 49 is thus allowed a given angle of rotation about an axis perpendicular to the plane of elevation of the drawing.

The plate 9 is held in the position of fig 2, ready to intercept the workpiece 2, by a pin 23 rigidly associated with the fixed structure 1a, against which a part of the hook 9a is caused to register; this same pin 23 also interacts with a heel 9b incorporated into the plate 9 at a distance equal to x from the hook 9a (in effect, the opposite end of the plate 9) to bring about the release of the workpiece 2, by occasioning a slight rotation of the bushing 49 about its pivot 22 once the travel distance x has been covered by the plate 9. Also making up the device are spring means, denoted 10, anchored at one end to the fixed structure 1a and at the other to the plate 9, by which the plate is returned to its position of readiness for the next workpiece 2 once the current workpiece 2 has been released as in fig 2a.

11a and 11b denote a pair of arms disposed at right angles to one another and merging at one end in an elbow that is mounted to a pivot 24; these two arms 11a and 11b constitute the transmission element 7 of the device, inasmuch as the one arm 11a engages in contact at one end, preferably by way of a roller 7a (thus eliminating possible friction), with the parabolic cam profile of the intercepting element 6, whilst the remaining arm 11b impinges by way of a respective roller, or active member 37, on a contact bolt 25 integral with the carriage 3.

Operation of the device thus far described will be discernible from fig 2a, which illustrates the position reached with acceleration terminated. Before arriving ultimately at the tool carriage 3, the workpiece 2 is engaged by the hook 9a of the intercepting plate 9, whereupon the plate 9 itself is drawn horizontally toward the tool carriage 3. This same forward movement causes the roller 7a to pass along the cam profile 8 of the plate 9, and in so doing, to describe a movement (substantially vertical and denoted Y) that occasions rotation of the transmission element anticlockwise, as viewed in the drawings, thereby shifting the carriage 3 through a horizontal distance denoted X; given the parabolic geometry of the cam profile, moreover, the movement thus transmitted will be characterized by a uniform acceleration, given that $Y = K \cdot X^2$.

Accordingly, the tool carriage 3 begins to move, accelerating steadily in the direction A followed by the workpiece 2. Clearly enough, to ensure that contact between the workpiece 2 and the vertical stop 5 occurs at zero relative velocity, the approach distance denoted b must be selected in such a way that with b equal to Y, one has the following equation in respect of time T,

$$Y = \frac{(a \cdot t^2)}{2}$$

which in terms of uniformly accelerating motion may also be expressed as follows:

$$Y = \frac{(V1 \cdot t)}{2}$$

Thus, if it is wished that the velocity V1 reached by the carriage 3 in time T should equal velocity V of the workpiece 2, it must be ensured that the travel Y effectively transmitted to the carriage is equal to distance b, or in other words, that the carriage 3 moves through a distance equal to the distance separating the stop 5 from the hook 9a; accordingly,

$$b = Y = \frac{(V \cdot t)}{2}$$

where V is the velocity of the workpiece 2. By means of this last equation, it becomes possible to calculate the horizontal distance X covered by the workpiece 2, given that this is equal to $V \cdot t$, and in accordance with the equation aforementioned, X is equal to twice distance b.

Implementing the various equations listed above, the workpiece 2 can be made to enter into contact with the stop 5 when the stop, therefore the tool carriage 3, has reached a velocity substantially identical to that of the workpiece, so that contact occurs without any discernible impact between the two bodies. As the stop 5 and the workpiece 2 kiss, the hook 9a will be disengaged from the workpiece 2 through the action of the heel 9b; encountering the pin 23, in fact, the heel causes the element 6 to rotate bodily upwards about the bushing pivot 22, lifting the hook 9a clear of the workpiece 2 in consequence.

At this juncture the aforementioned spring means 10 will operate to return the plate 9 to its position of readiness for a further workpiece.

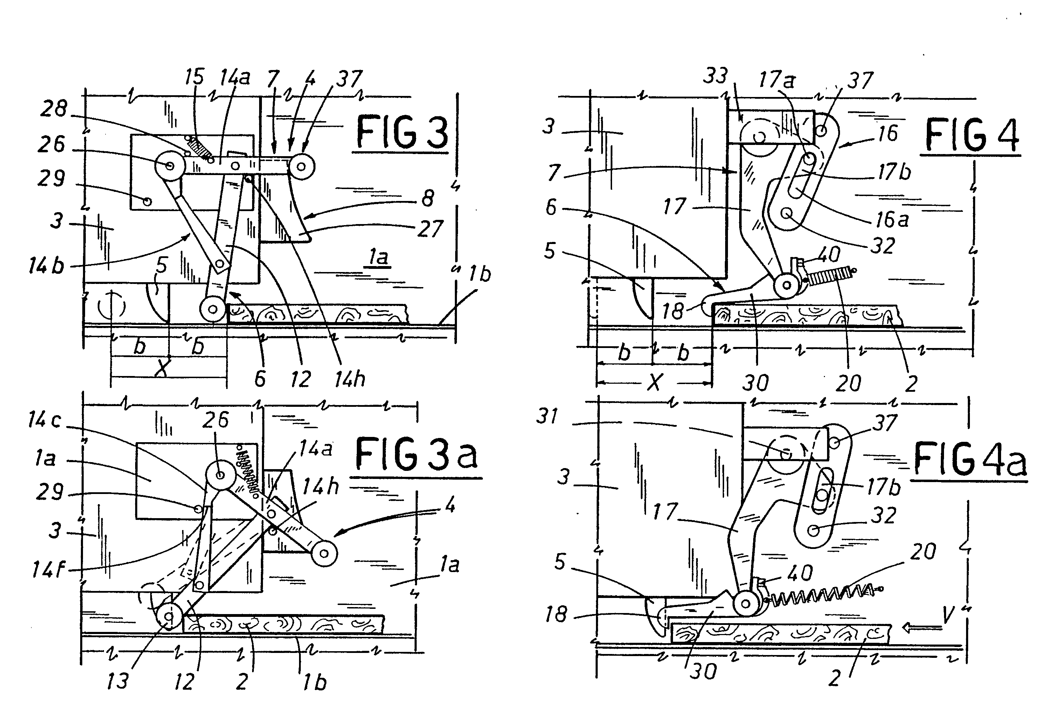

Fig 3 illustrates an alternative embodiment of the device already described, in which the intercepting element 6 consists in a rod 12 disposed essentially normal to the feed direction A of the workpiece 2; 13 denotes a cylindrical element or roller fitted to the end of the rod 12 which enters into contact with the workpiece 2. The rod 12 is secured to and articulated at two respective points with a second rod 14b, of which one end is anchored rotatably to a pivot 26 issuing from the fixed structure 1a and the projecting end carries a roller 37, and with one end of a third rod 14b, of which the remaining end impinges on a projection 14c integral with the boss of the first rod 14a mounted to the pivot 26.

The three rods form a rigid triangle of slender proportions (considered in the dimension normal to the plane of elevation), which can be accommodated between the carriage 3 and the fixed structure 1a. The weight of the rods is carried by a spring 15, which also tensions the triangle upward against a fixed pin 28, in the ready position (fig 3).

The roller 37 at the end of the second rod 14a is engaged in contact with a cam 27 of parabolic profile rigidly associated with the carriage 3 and constituting the acceleration means 8.

In operation, engagement of the rod 12 by the workpiece 2 causes the entire triangle of rods 12, 14a and 14b to rotate, clockwise in this instance, and the roller or active member 37 to run along the cam profile 27; the effect of such a movement is to produce an accelerating horizontal movement of the carriage 3. As regards calculation of the distance between the two points at which the workpiece 2 is intercepted by the rod 12 and then engaged by the vertical stop 5, the same equations as previously described continue to apply (i.e. the sum of the horizontal movements of the active member 37 and the cam 27 must respond to the parabolic equation).

As in the first example described, separation of the workpiece 2 and the intercepting element, in this case the rod 12, occurs when the velocities of the carriage and the workpiece are matched; the third rod 14a strikes against a fixed pin 29 and is dislodged from the projection 14c, whereupon the triangle collapses, narrowing the angle between the second and third rods 14a and 14b (phantom line, fig 3a) and will be drawn upwards by the action of the spring 15.

Once the workpiece 2 has been carried clear, the rod 12 drops back naturally to the ready position, which is established by means of a stop 14h rigidly associated with the second rod 14a; at this point, the third rod 14b can also drop and return to its former position, engaging the projection 14c by way of an appropriately embodied tip 14f and restoring the normal geometry of the triangle.

A further variation on the device, shown in figs 4 and 4a, has the intercepting element 6 embodied as a hook 18 afforded by a rod 30 disposed parallel to the feed direction of the workpiece 2. The rod 30 is articulated with the bottom end of a lever 17 extending essentially normal to the feed direction, of which the top end 31 is pivotably mounted to the fixed structure 1a and carries a pin 17a projecting from a further arm 17b and slidably insertable in the central slot 16a of a link 16, also pivoted at one end 32 to the fixed structure 1a. The end of the link 16 opposite to the pivoted end carries the active member 37, in this instance a pin, which impinges permanently on the contact bolt of the carriage 3. Here too, the device comprises spring means denoted 20, of which one end is anchored to the fixed structure 1a and the other attached to the end of the rod 30 opposite to that affording the hook 18.

As discernible from fig 4a, interception of the workpiece 2 by the hook 18 occasions rotation of the lever 17 and transmission of rotary motion by way of the pin 17a to the link 16, which duly converts and passes on this same rotary motion as a substantially uniform rectilinear acceleration to the carriage 3, by way of the active member 37. Calculation of the distances denoted b and X remain the same as in the case of the embodiments already described, needless to say, whilst separation of the hook 18 and the workpiece 2 is achieved through the adjustment of a screw 40 which terminates the upwardly curving trajectory of the rod 30 and the lever 17. Thus, the highest point of the trajectory described by the rod 30, which coincides with the release of the hook 18, occurs substantially when the workpiece 2 encounters the vertical stop 5 of the carriage. With the hook 18 released, the rod 30 will be returned by the spring means 20 to its position of readiness for the next workpiece.


## Claims

1) An accelerator device for machines (1) operating in continuous cycle, and in particular woodworking machines, comprising:
-at least one pair of chain or belt loops (1b) disposed one above the other in a vertical plane, between which single workpieces (2) are gripped and conveyed horizontally in a given direction;
-a plurality of fixed tools occupying successive positions along the fixed structure (1a) of the machine, flanking the feed direction of the workpieces (2);
-a plurality of travelling tools occupying fixed positions on a carriage (3) capable of movement in relation to the fixed structure (1a), of which the underside affords at least one vertical stop (5) intersecting the feed direction of the workpieces;
-activating means (4) by which the carriage (3) is engaged and accelerated to the point where its velocity is matched substantially to that of the workpiece, and the workpiece subsequently released, characterized
in that activating means (4) consist in:
-an element (6) by which the workpiece (2) is intercepted, anchored indirectly to the fixed structure (1a) in a position preceding that of the vertical stop (5) in relation to the feed direction of the workpiece (2), and capable of movement in a direction normal to the workpiece between two limit positions whereby the workpiece is intercepted and released, respectively, and in a direction parallel to the feed direction between a retracted position, ready to intercept the advancing workpiece, and an extended position of separation from the workpiece;
-a transmission element (7) interposed between the intercepting element (6) and the carriage (3), engaging at least in contact with the carriage by way of an active member (37), and mounted pivotably to the fixed structure (1a) in such a way as to allow rotation relative to the intercepting element (6) through a given angle ($\alpha$) about a horizontal axis, following interception of the workpiece;
-acceleration means (8) interacting with the transmission element (7) and designed, following engagement of the workpiece (2) by the intercepting element (6), to invest the active member (37), hence the carriage (3), with uniformly accelerated rectilinear motion along the feed direction for a duration sufficient to permit of matching the velocity of the carriage (3) substantially to the velocity (V) of the workpiece (2).

2) A device as in claim 1, comprising:
-an intercepting element (6) embodied as a plate (9) disposed parallel to the feed direction of the workpiece (2), of which the end directed toward the carriage (3) affords a downwardly projecting hook (9a) serving to engage the workpiece (2), and the remaining end affords a downwardly projecting heel (9b) of which the action separates the intercepting element (6) from the workpiece (2) on arrival at the extended limit position;
-acceleration means (8) embodied as a cam profile of parabolic geometry incorporated into the top of the plate (9);
-a transmission element (7) embodied as an angled component mounted to the fixed structure (1a) and pivotable about an axis parallel to the plane occupied by the workpiece;
-spring means (10) associated with the intercepting element (6) and anchored to the fixed structure (1a), by which the intercepting element is returned to the retracted position.

3) A device as in claim 2, wherein the transmission element (7) consists in a pair of arms (11a, 11b) merging at right angles, of which one arm (11a) is engaged in sliding contact with the acceleration means (8) and the remaining arm makes contact with the carriage (3) by way of the active member (37).

4) A device as in claim 1, comprising:

-an intercepting element (6) embodied as a first rod (12) disposed substantially normal to the feed direction of the workpiece (2), of which the bottom end affords a cylindrical element (13) intersecting the feed direction and positioned to enter into contact with the workpiece (2);

-a transmission element consisting in a second and a third rod (14a, 14b) permanently associated at respective points with the first rod, mutually angled and mounted together pivotably at one end to the fixed structure (1a), of which the second rod (14a) impinges slidably by way of the active member (37) on acceleration means (8) consisting in a cam profile (27) of parabolic geometry integral with the carriage (3).

5) A device as in claim 4, wherein the three rods (12, 14a, 14b) form a triangle in which the tip (14f) of the third rod (14b) impinges on a projection (14c) integral with the pivoted terminal boss (26) of the second rod (14a), further comprising a spring (15) anchored to the fixed structure (1a) and connected to the second rod (14a), by which the triangle is tensioned against a fixed pin (28) when in the retracted position, and a fixed pin (29) designed to intercept the third rod (14b) on arrival at the extended limit position, to the end of separating the third rod (14b) from the projection (14c), thereby collapsing the triangle and narrowing the angle between the second and third rods.

6) A device as in claim 4, wherein the horizontal movements of the active member (37) and of the cam profile (27) respond to a parabolic equation.

7) A device as in claim 1, comprising:

-a transmission element (7) embodied as a link (16) of which the bottom end is mounted pivotably to the fixed structure (1a) and the remaining end carries a pin engaging in contact with the carriage (3) and constituting the active member (37);

-acceleration means consisting in a lever (17), mounted pivotably to the fixed structure (1a) and disposed substantially normal to the feed direction of the workpiece (2), and carrying a pin (17a) that is slidably insertable in a central slot (16a) afforded by the link (16);

-an intercepting element (6) exhibiting a hook (18) by means of which to engage the workpiece (2), and associated with the bottom end of the lever (17);

-spring means (20) associated with the intercepting element (6) and anchored to the fixed structure (1a), by which the intercepting element is returned to the retracted position.

# FIG 1

# FIG 2

# FIG 2a

EP 0 406 177 A1

FIG3

FIG4

FIG3a

FIG4a

8

## DOCUMENTS CONSIDERED TO BE RELEVANT

EP 90830258.1

| Category | Citation of document with indication, where appropriate, of relevant passages | Relevant to claim | CLASSIFICATION OF THE APPLICATION (Int Cl⁵) |
|---|---|---|---|
| A | <u>EP - A1 - 0 224 440</u><br>(CIBA-GEIGY)<br>  * Abstract; claim 1 *<br>-- | 1,4 | B 23 Q 7/03<br>B 65 G 47/28 |
| A | <u>AT - B - 385 697</u><br>(VOEST-ALPINE)<br>  * Claim 1; fig. *<br>-- | 1 | |
| A | <u>CH - A5 - 598 911</u><br>(PIATTI)<br><br>---- | | |

TECHNICAL FIELDS
SEARCHED (Int Cl⁵)

B 65 G 17/00
B 65 G 47/00
B 23 Q 7/00

The present search report has been drawn up for all claims

| Place of search | Date of completion of the search | Examiner |
|---|---|---|
| VIENNA | 27-09-1990 | RIEDER |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82